# EUROPEAN PATENT SPECIFICATION

(11) **EP 0 502 286 B1**
(45) Date of publication and mention of the grant of the patent: **09.08.1995**
(21) Application number: 91830545.9
(22) Date of filing: 06.12.1991
(51) Int. Cl.: A21B 3/13, A47J 36/02

(54) **Paper backing-pan for cooking cakes and process for producing same**
Blech aus Papier zum Backen von Kuchen und Verfahren zu seiner Herstellung
Moule en papier pour la cuisson des gâteaux et procédé de sa fabrication

(30) Priority: 05.03.1991 IT 56691
(43) Date of publication of application: 09.09.1992
(73) Proprietor: NOVACART SpA, I-22040 Garbagnate Monastero, Como (IT)
(72) Inventor: Anghileri, Gianmario, c/o Novacart S.P.A., 22040 Garbagnate Monastero (Como) (IT)
(74) Representative: Righetti, Giuseppe

(56) References cited:
- DE-A- 2 365 279
- GB-A- 477 980
- US-A- 1 668 101

## Description

The present invention refers to a paper backing-pan for cooking cakes and to a process for producing this type of pans.

It is known that there are on the market backing-pans for cooking cakes consisting of vessels of truncated conical or pyramidal form. Vessels are required of the above shape for stacking reasons in order to optimize stock-in-trade, make the transport easier and consequently reduce the relevant costs.

Pans presently meeting the above requirements are made either of thin aluminium and other malleable material foils, or of paper.

Aluminium pans are obtained by forming, each from a single flat foil, and exhibit a flat bottom wall from which a wall slightly inclined to the vertical rises. While pans of the described type have proved to be efficient, they are subjected to some drawbacks enabling only a limited rise thereof. One drawback is due to the fact that pans formed from aluminium or other metal foils cannot be used in microwave ovens due to undesirable wave reflections that may be generated within the ovens. Another drawback proper to these pans comes out when the cake is to be cut. In fact, due to the hardness of the material it is impossible to cut the side wall of the pan with a knife and therefore the cake must be previously withdrawn from the container. Finally, these pans involve rather high production costs as they are made of a material more expensive than paper.

On the other hand, paper pans are obtained by assembling two distinct parts with each other, namely the bottom and side wall.

When pans of truncated conical form are to be achieved, the pan side walls must be made by die cutting, whereas when shapes having many projections and recesses are to be achieved, as in the case of dove-shaped or Christmas tree-shaped pans they are directly made from a roll.

To make upright walls in a pan of roundish shape, hollow punches are used that cut a plurality of strips substantially in the form of a sector of an annulus from a paper sheet. Only in this manner once each strip has been mounted on the respective bottom wall, pans of the desired frusto-conical form can be achieved.

This type of manufacture however has some drawbacks, one of which resides in the impossibility of having a continuous production, since the strips must be made one at a time so that they may be subsequently stared in the magazine of the machines carrying out the pan assembling. Needless to say that, as a result, pan-making plants have a reduced productivity.

Another drawback is due to the necessity of having a given amount of bath punched foils and cut strips available in stock so that the pan assembling step need not be interrupted, which necessity however also involves the availability of sufficient room at the inside of the factory.

Finally, since the strips are formed by die cutting from individual foils of big sizes, the formation of a great deal of swarf material occurs that adversely affects the production costs.

The use of continuous paper webs loaded on reels is only made possible when the pans have very complicated shapes. In fact in these cases the affluence of material due to the presence of a curved outline, with projections and recesses, enables the achievement of pans having sufficiently plastic and soft side walls, so that a side flaring will be spontaneously formed when pans subsequently need to be stacked.

It will be also recognized that, irrespective of the selected configuration, the above described paper pans are subjected to other drawbacks.

One drawback occurs while cakes are being cooked and began rising in the pans, due to the weak strength and holding power of the side walls. Actually for the purpose of keeping the pan form unchanged, that is without bulges and deformations, the side walls must be sufficiently stiff. For this reason two paper sheets are normally used that are coupled to each other by gluing. More specifically, provision is made for the use of a creased sheet constituting the inner surface designed to contact the cake and a smooth sheet disposed to the outside of the creased sheet in order to give the side wall the due stiffness. Obviously all these operations involve high production costs.

It is also to be noted that these pans must be made of paper adapted for food, suitably treated with anti-adhering substances so as to prevent the cake from adhering to the pan during the baking step. On the other hand, however, this type of paper hinders and greatly reduces the adhesion capability of the bottom wall to the side wall.

In particular, it is known from document GB-A-477980 a baking-pan formed by a fibrous body and foil sheets secured to both sides thereof. The baking-pan comprises a bottom wall and a pleated side wall of frusto-conical shape perimetrically rising from the bottom wall.

The main object of the present invention is to solve the problems of the known art by a paper backing-pan of improved practical use in which the side walls are made of individual sheets instead of coupled sheets.

In greater detail one object of the invention is to make paper baking-pans in which the strips forming the side walls are of rectangular form so that they can be drawn from a roll thereby enabling a continuous production.

Another object of the invention is to make a baking-pan in which the parts to be glued together do not exhibit surfaces treated with anti-adhering substances.

In the achievement of the above objects, the main technical problem to be solved is to make a baking-pan in which the upper rim of the side wall has sufficient stiffness to avoid the pan suffering from bulge and deformation phenomena during the cake cooking and rising steps.

The foregoing and further objects that will become more apparent in the course of the following description, are substantially attained by a paper baking-pan for cooking cakes, characterized in that said containing side wall has an upper rim (7) which in cross-sectional view exhibits a first portion (8) folded toward the outside of baking-pan consecutively to which there is a second portion (9) turned toward the inside of the baking-pan under the first portion and glued to the outer surface (3a) of the side wall (3) at the first folded portion (8), the upper rim (7) exhibiting a rounded portion (10) which is raised relative to the side wall (3), said rim (7) defining a perimetrical loop (12a) within which at least an inextensible string (12) is housed.

In accordance with the present invention this baking-pan is produced by a process characterized by the fact of comprising the following steps:
- unrolling from a reel a web of smooth paper exhibiting one surface coated with an anti-adhering material and a second surface opposite to the first one;
- turning over a first and a second longitudinal edges of said paper web, on said second and first surfaces respectively;
- raising the first turned-over edge from said second surface;
- applying glue material between said first edge and second surface;
- inserting an inextensible string into a loop defined between the first longitudinal edge and said second surface;
- moving the first edge close to you second surface of said web;
- crinkling said paper web so as to define thereon a plurality of pleats disposed parallelly in side by side relation and extending at right angles to the longitudinal extension of the web;
- cutting the web into strips of predetermined length;
- wrapping and fastening the strip around a perimetrical edge of a flat element to define a pan exhibiting a buttom wall consisting of said flat element and having an inner surface treated with anti-adhering material and an otuer surface opposite to said inner surface, as well as a containing side wall consisting of said strip and exhibiting an inner surface coated with anti-adhering material formed with said first surface at the strip itself;
- forming the pan so as to give an upper rim thereof defined by said first longitudinal edge of the paper strip an outwardly folded configuration relative to the pan itself while causing, by a perimetrical stretching action, the smoothing of said pleats and the tensioning of the string along the whole perimetrical extension of said upper rim.

Further features and advantages will become more apparent from the detailed description of a preferred embodiment of a paper baking-pan for cooking cakes and the process for producing the same in accordance with the present invention, given hereinafter by way of non limiting example with reference to the accompanying drawings, in which:
- Figure 1 is a partly sectional front view of the baking-pan for cooking cakes in accordance with the present invention;
- Fig. 2 is a sectional view to an enlarged scale of a detail of the upper rim of the pan side wall;
- Figs. 3 to 8 sequentially show the different working steps of the process of the invention, to an enlarged scale.

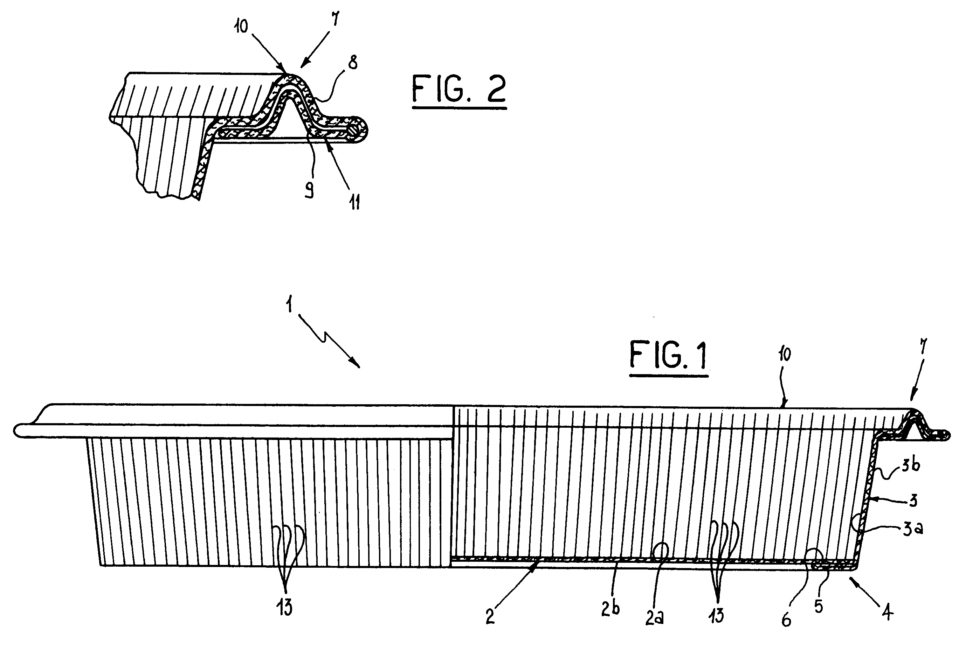

Referring to the drawings and in particular to Fig. 1, a baking-pan for cooking cakes in accordance with the present invention has been generally identified by reference numeral 1.

Pan 1, made of crinkled paper is a vessel adapted to be directly introduced into an oven and designed to contain a cake or the like.

As shown in Fig. 1, pan 1 consists of a substantially flat bottom wall 2 and a crinkled side wall 3 rising upright from the bottom wall 2. The bottom wall 2 and side wall 3 respectively exhibit an inner surface 2a, 3a coated with anti-adhering material and designed to came in contact with the cake, and an outer surface 2b, 3b non-coated with anti-adhering material and disposed opposite to said inner surface 2a, 3a. The outer surface 2b of the bottom wall 2 is adapted to be brought into contact with any horizontal supporting surface.

The side wall 3 exhibits a lower edge 4 for attachment to the bottom wall 2. This edge 4 is folded twice and comprises one portion 5 folded radially to the inside of the pan 1 and a second portion 6 consecutive to the first portion 5 which is folded radially to the outside and is fastened to the outer surface 2b of the bottom wall 2 by gluing.

Advantageously, in accordance with the present invention, the portion 6 and the outer surface of wall 2 are not coated with anti-adhering material so that they can perfectly adhere to each other.

The side wall 3 also has an upper perimetrical rim 7 consisting of an edge folded to the outside of the pan 1 turned over upon itself and glued to the outer surface 3a of the containing side wall.

In greater detail, the upper rim 7 in cross-sectional view as shown in Fig. 2 exhibits one portion 8 folded to the outside of pan 1 consecutively to which there is a second portion 9 turned to the inside of the pan under the first portion and glued to the outer surface 3a of the perimetrical wall 3 at the first folded portion 8. Due to the conformation of the first and second portions 8 and 9 the upper rim 7 exhibits a rounded portion 10 which is raised relative to the perimetrical wall 3 and consecutively to which a final end portion 11 extends.

Defined between the first 8 and second portions 9, at the end portion 11, is a loop 12a inside which at least an inextensible string 12 is engaged.

In accordance with the present invention, the string 12 is submitted to longitudinal tensioning along the whole perimetrical extension of the upper edge 7.

In known manner, the containing side wall is provided with a plurality of pleats 13 disposed consecutively and extending substantially in a vertical direction.

Preferably, the portion at the containing side wall extending between the lower edge 4 and upper edge diverges, as it rises, from the bottom wall 2 of pan 1. Consequently the pleats of the containing wall 3 have a gradually decreasing depth as they move away from the bottom wall and reach a zero value at the upper rim 7.

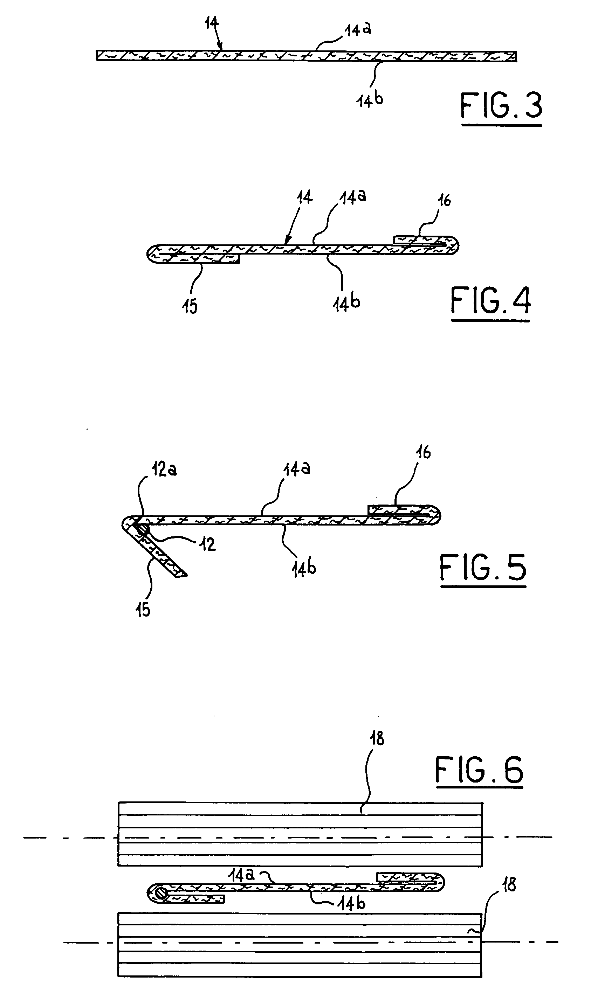

Still in accordance with the present inventian a process for producing the above pan wall be now described, referring particularly to Figs. 3 to 7. In these figures, for greater convenience different reference numerals than those used in Figs. 1 and 2 are adapted even when corresponding elements are taken into account.

According to one step of the process a smooth paper web 14 exhibiting one surface 14a coated with an anti-adhering material and a second non-coated surface 14b opposite to the first surface, is continously unrolled from a reel. The web 14 is submitted to the folding at one longitudinal edge 15 on the second surface 14b, as well as of a second longitudinal edge 16 on the first surface 14a.

The first edge 15 is then raised relative to the second surface 14a to enable glue material to be applied between the first edge and the second surface. Then an inextensible string 17 is introduced into a loop 17a defined between the first edge 15 and second surface 14b, the first edge being afterwards moved again close to said second surface.

As shown in Fig. 6, the paper web 14 being worked is then passed between a pair of grooved rollers 18 carrying out a crinkling action on the web so as to define a plurality of pleats not shown in Figs. 3 to 8 but corresponding to pleats 13 in Figs. 1 and 2, which are disposed parallelly in side by side relation and extend at right angles to the longitudinal extension of the web.

The crinkled web is then cut into strips of appropriate length substantially corresponding to the perimetrical extension of the bottom wall of the pan to be achieved. Each of said strips is wrapped around the perimetrical edge of a flat element adapted to define said bottom wall, and fastened thereto. This operation consists in wrapping the strip 14 around one side wall 20a of a rotating mandrel 20 on the base wall 20b of which a bottom element 19 is engaged. Preferably, the mandrel 20 exhibits a frusto-conical configuration so that the paper strip 14 wrapped thereon is oriented obliquely to the bottom element 19. As a result, the farther said strips are from the bottom element 19, the smaller the depth of the obtained pleats is.

The mandrel 20 can also be provided with a shoulder 10c adapted to cause, simultaneously with the wrapping step, a preorientation of the first edge 15 to the outside of the pan itself.

During the wrapping step, the spreading of the glue material also occurs through a delivery nozzle not shown, between the second folded edge 16 and the perimetrical edge of the bottom element 10, at the outer surface 19b thereof. The glue spreading is followed by a further folding step applied to the second edge 16 which is folded to the inside of the pan 1 and fastened to the outer surface 19b. This further folding can be for example achieved by means of one or mare presser rollers acting downstream of the glue-deliverying nozzle, relating to the direction of rotation of the mandrel.

In conclusion, as a result of the wrapping and fastening operation, the bottom element 19 will form the bottom wall 2 of pan 1 provided with the inner surface 2a coated with anti-adhering material whereas the paper strip 14 will form the containing wall 3 of said pan.

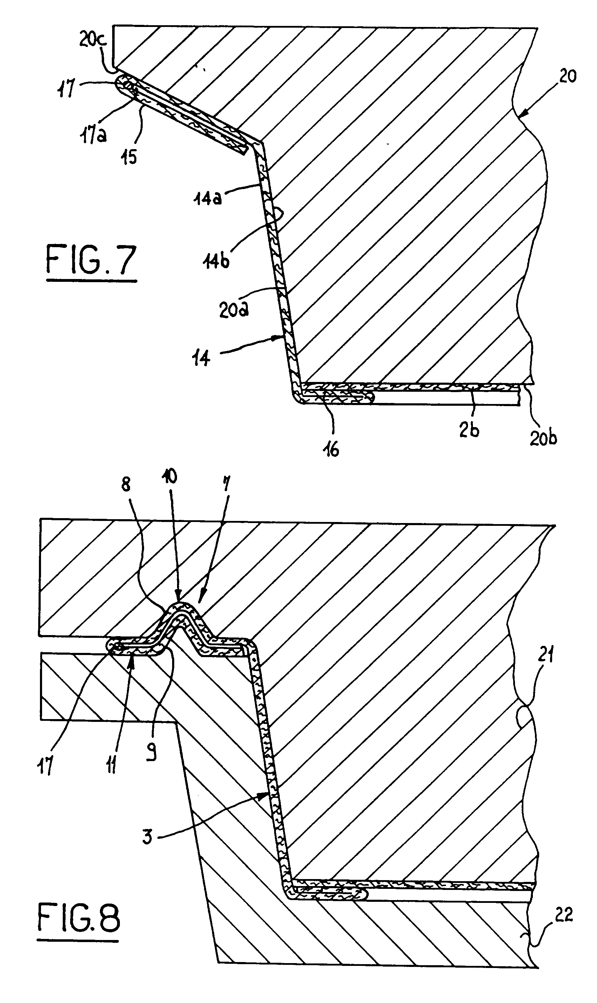

When the wrapping and fastening step is over, the worked-on pan is submitted to a forming step, shown by way of example in fig. 8. In this figure, since the pan is defined in accordance with its final configuration, reference numerals shown in Figs. 1 and 2 are used again. During this step the pan 1 is enclosed between two heated dies 21, 22 the action of which gives the upper rim 7 a configuration folded back externally of the pan, consequently determining, by a perimetrical stretching action, the ultimate flattening of pleats 13 in the vicinity of the upper rim. This flattening action also brings about the tensioning of the string 12 along the whole perimetrical extension of the upper rim.

The shape of the dies 21, 22 is also adapted to define said rounded and end portions, 10 and 11, on the upper rim 7.

Due to the die heating it is possible to achieve the quick drying of the glue material used in the preceding steps, said material being preferably of the thermosetting type.

The present invention attains the intended purposes.

The pan of the invention is of easy accomplishment and improved practical use in that its use is allowed in microwave ovens, avoids the cake being withdrawn at the cutting and is economically advantageous.

In addition, by virtue of the use of paper strips of rectangular configuration it is possible to optimize the pan production by avoiding the formation of swarfs and enabling the use of reels for the support of a continous paper web.

It is to be noted that, due to the particular conformation of the upper rim and the presence of the tensioned string, the pan side wall is not subjected to bulges and deformations during the cake rising and cooking.

It wall be also recognized that the pan offers a good adhesion between the bottom wall and the lower edge at the containing wall, due to the particular folding of the lower edge.

It will be finally noted that a good adhesion is also found at the junction area between the opposite ends of the strip forming the side wall where the overlapping between a portion coated with anti-adhering material and a non-coated portion occurs. In fact in this area it is not necessary to carry out the glueing any longer because due to the configuration and stiffness of the edges any relative movement between the overlapped flaps of the side wall is prevented.

## Claims

1. A paper baking-pan for cooking cakes, adapted to be directly introduced into an oven, comprising:
- a substantially flat bottom wall (2) defining an inner surface (2a) coated with anti-adhering material and designed to come in contact with the cake, and an outer surface (2b) designed to be brought into contact with a supporting surface;
- a containing side wall (3) perimetrically rising from the bottom wall (2) and defining an inner surface (3a) coated with an anti-adhering material and designed to came in contact with the cake, and an outer surface (3b), said containing side wall (3) being provided with a plurality of consecutive upright pleats (13),
characterized in that a said containing side wall (3) has an upper rim (7) which in cross-sectional view exhibits a first portion (8) folded toward the outside of the baking-pan consecutively to which there is a second portion (9) turned toward the inside of the baking-pan under the first portion and glued to the outer surface (3b) of the side wall (3) at the first folded portion (8), the upper rim (7) exhibiting a rounded portion (10) which is raised relative to the side wall (3), said rim (7) defining a perimetrical loop (12a) within which at least an inextensible string (12) is housed.

2. A baking-pan according to claim 1, characterized in that the portion of the containing side wall extending between a lower edge (4) of the side wall and said upper rim (7) has a diverging extension starting from the pan bottom wall (2), said pleats (13) exhibiting a gradually decreasing depth from said lower edge (4) to said upper rim (7).

3. A baking-pan according to claim 2, characterized in that at the upper rim (7) said pleats (13) have a zero depth.

4. A baking-pan according to claim 1, characterized in that said inextensible string (12) is submitted to tensioning along the whole circumferential extension of said upper rim (7).

5. A paper baking-pan for cooking cakes according to claim 1,
characterized in that said containing side wall (3) exhibits a lower edge (4) formed with one portion (5) folded radially to the inside of the pan and a second portion (6) folded radially to the outside of the pan, said second portion (6) being glued to the outer surface (2b) of the bottom wall (2).

6. A process for the production of a baking-pan for cooking cakes, characterized by the fact of comprising the following steps:
- unrolling from a reel a web (14) of smooth paper exhibiting one surface (14a) coated with an anti-adhering material and a second surface (14b) opposite to the first one;
- turning over a first (15) and a second (16) longitudinal edges of said paper web (14), an said second (14b) and first (14a) surfaces respectively,
- raising the first turned-over edge (15) from said second surface (14b);
- applying glue material between said first edge (15) and second surface (14b);
- inserting an inextensible string (12) into a loop (12a) defined between the first longitudinal edge (15) and said second surface (14b);
- moving the first edge (15) close to the second surface (14b) of said web (14);
- crinkling said paper web (14) so as to define thereon a plurality of pleats disposed parallelly in side by side relation and extending at right angles to the longitudinal extension of the web;
- cutting the web (14) into straps of predetermined length;
- wrapping and fastening the strip (14) around a perimetrical edge of a flat element (19) to define a pan exhibiting a bottom wall consisting of said flat element and having an inner surface treated with anti-adhering material and an outer surface opposite to said inner surface, as well as a containing side wall consisting of said strip and exhibiting an inner surface coated with anti-adhering material formed with said first surface of the strip itself;
- die forming the pan so as to give an upper rim (7) thereof defined by said first longitudinal edge of the paper strip an outwardly folded configuration relative to the pan itself while causing, by a perimetrical stretching action, the smoothing at said pleats (13) and the tensioning of the string (12) along the whole perimetrical extension of said upper rim.

7. A process according to claim 6, characterized in that the step of wrapping and fastening the strip around the flat element comprises the following further steps:
- positioning the flat element (19) against a base wall (20b) of a mandrel (20) matching the shape of said pan;
- wrapping the paper strip (14) around a perimetrical wall (20a) of the mandrel (20);
- spreading the glue material between the second folded edge of the paper strip and the perimetrical edge of the base element, at said outer surface;
- folding the second edge of the paper strip so as to fasten it to the outer surface of the base element.

8. A process according to claim 7, characterized in that during the wrapping step of the paper strip on the mandrel side wall a pre-orienting step is also carried out in which said first longitudinal edge is oriented to the outside of said pan.

## Patentansprüche

1. Backform aus Papier zum Backen von Kuchen, dazu geeignet, direkt in einem Backofen eingeführt zu werden, umfassend:
- eine im wesentlichen ebene Bodenwandung (2), die eine mit einem Entformungsmittel bedeckte und mit dem Kuchen in Berührung kommende Innenfläche (2a) und eine mit einer Auflageebene in Berührung kommende Außenfläche (2b) festlegt;
- eine seitliche Begrenzungswand (3), die sich umlaufend von der Bodenwandung (2) erhebt und eine mit einem Entformungsmittel bedeckte und mit dem Kuchen in Berührung kommende Innenfläche (3) und eine Außenfläche (3b) festlegt, wobei die seitliche Begrenzungswand (3) mit einer Vielzahl von aufeinanderfolgenden senkrechten Faltungen (13) aufweist,
dadurch gekennzeichnet, daß die seitliche Begrenzungswand (3) einen oberen Rand (7) besitzt, der im Querschnitt ein nach außen der Backform umgebogenen ersten Abschnitt (8) aufweist, dem ein zweiter Abschnitt (g) folgt, der nach innen der Backform unterhalb des ersten Abschnittes umgeschlagen und mit der Außenfläche (3b) der Seitenwand (3) im Bereich des ersten umgebogenen Abschnittes (8) verklebt ist, wobei der obere Rand (7) einen abgerundeten Abschnitt (10) aufweist, der sich gegenüber der Seitenwand (3) erhebt, wobei der obere Rand (7) eine umlaufende Schleife (12a) festlegt, innerhalb welcher mindestens eine nicht dehnbare Schnur (12) aufgenommen ist.

2. Backform nach Anspruch 1, dadurch gekennzeichnet, daß der sich zwischen dem unteren Rand (4) der Seitenwand und dem oberen Rand (7) sich erstreckende Abschnitt der seitlichen Begrenzungswand sich auseinanderlaufend von der Bodenwandung (2) der Backform erhebt, wobei die Faltungen (13) eine Tiefe aufweisen, die allmählich vom unteren Rand (4) bis zum oberen Rand (7) abnimmt.

3. Backform nach Anspruch 2, dadurch gekennzeichnet, daß die Faltungen (13) im Bereich des oberen Randes (7) eine Nulltiefe besitzen.

4. Backform nach Anspruch 1, dadurch gekennzeichnet, daß die nicht dehnbare Schnur (12) längs der gesamten Umfangserstreckung des oberen Randes (7) verspannt ist.

5. Backform aus Papier zum Backen von Kuchen, nach Anspruch 1, dadurch gekennzeichnet, daß die seitliche Begrenzungswand (3) einen unteren Rand (4) aufweist, der durch einen ersten, radial nach innen der Backform gebogenen Abschnitt (5) und einen zweiten Abschnitt (6) gebildet wird, der radial nach außen der Backform gebogen ist, wobei der zweite Abschnitt (6) mit der Außenfläche (2b) der Bodenwandung (2) verklebt ist.

6. Verfahren zur Herstellung einer Backform zum Backen von Kuchen, dadurch gekennzeichnet, daß es folgende Arbeitsschritte umfaßt:
- Abzug von einer Rolle eines glatten Papierstreifens (14), der eine erste mit einem Entformungsmittel bedeckte Oberfläche (14a) und eine der ersten Oberfläche abgewandte Oberfläche (14b) aufweist;
- Umschlagen eines ersten (15) und eines zweiten (16) Längsrandes des Papierstreifens (14) jeweils auf die zweite (14b) und die erste (14a) Oberfläche;
- Anheben des ersten umgeschlagenen Randes (15) von der zweiten Oberfläche (14b);
- Anbringung von Klebemittel zwischen dem ersten Rand (15) und der zweiten Oberfläche (14b);
- Einfügen einer nicht dehnbaren Schnur (12) in eine Schleife (12a), die zwischen dem ersten Längsrand (15) und der zweiten Oberfläche (14b) bestimmt ist;
- Anstellen des ersten Randes (15) an die zweite Oberfläche (14b) des Papierstreifens (14);
- Kreppen des Papierstreifens (14), um auf demselben eine Anzahl von Faltungen festzulegen, die parallel nebeneinander angeordnet sind und sich senkrecht zur Längsabwicklung des Papierstreifens selbst erstrecken;
- Abschneiden des Papierstreifens (14) in Abschitten vorgegebener Länge;
- Aufwicklung und Befestigung des Papierstreifens (14) um den Umfangsrand eines ebenen Teiles (19) herum, um eine Backform festzulegen, die eine Bodenwandung aufweist, die aus diesem ebenen Teil besteht und eine mit Formungsmittel behandelte Innenfläche und eine der Innenfläche abgewandte Außenfläche aufweist, sowie eine seitliche Begrenzungswand aufweist, die aus diesem Papierstreifen besteht und eine mit Entformungsmitteln bedeckte Innenfläche und aus der ersten Fläche des Papierstreifens selbst ausgeführte Innenfläche aufweist;
- Formung der Backform um einem oberen, durch den ersten Längsrand des Papierstreifens festgelegten Rand (7) der Backform eine gegenüber der Backform selbst nach außen umgebogene Ausbildung zu geben, wobei folglich durch eine umlaufende Streckung die Glättung der Faltungen (13) und eine Verspannung der Schnur (12) längs der gesamten Umfangserstreckung des oberen Randes bewirkt wird.

7. Verfahren nach Anspruch 6, dadurch gekennzeichnet, daß der Aufwickel- und Befestigungsschritt des Papierstreifens um dem ebenen Teil herum, die folgenden weiteren Arbeitsschritte umfaßt:
- Positionierung des ebenen Teils (19) gegen eine Grundwandung (20b) eines zur Backform gegengeformten Dornes (20);
- Umwicklung des Papierstreifens (14) um die Umfangswand (20a) des Dornes (20);
- Aufbringung des Klebemittels zwischen dem ersten umgebogenen Rand des Papierstreifens und dem Umfangsrand des Grundteils im Bereich dieser Außenfläche;
- Umbiegen des zweiten Randes des Papierstreifens, um ihn gegen die Außenfläche des Grundteils zu befestigen.

8. Verfahren nach Anspruch 7, dadurch gekennzeichnet, daß wahrend des Umwicklunschrittes des Papierstreifens auf der Seitenwand des Dorns ein weiterer vorheriger Ausrichtungsschritt erfolgt, bei dem der erste Längsrand nach außen der Backform gerichtet wird.

## Revendications

1. Moule en papier pour la cuisson des gâteaux, adapté à être introduit directement dans un four, comprenant:
- une paroi de fond (2) sensiblement plate, définissant une surface intérieure (2a) revêtue d'une matière anti-adhérente et destinée à venir en contact avec le gâteau, et une surface extérieure (2b) destinée à venir en contact avec une surface d'appui;
- une paroi latérale de confinement (3) s'élevant de manière périmétrale de la paroi de fond (2) et définissant une surface intérieure (3a), revêtue de matière anti-adhérente et destinée à venir en contact avec le gâteau, et une surface extérieure (3b), ladite paroi latérale de confinement (3) étant pourvue d'une pluralité de plis verticaux consécutifs (13),
caractérisé en ce que ladite paroi latérale de confinement (3) a un rebord supérieur (7) présentant en coupe transversale une première portion (8) repliée vers l'extérieur du moule, consécutivement à laquelle il y a une deuxième portion (9) pliée vers l'intérieur du moule au-dessous de la première portion et collée à la surface extérieure (3b) de la paroi latérale (3) en correspondance de la première portion repliée (8), le rebord supérieur (7) présentant une portion arrondie (10) plus élevée que la paroi latérale (3), ledit rebord (7) définissant une boucle périmétrale (12a) dans laquelle est logé au moins un cordonnet inextensible (12).

2. Moule selon la revendication 1, caractérisé en ce que la portion de la paroi latérale de confinement s'étendant entre un bord inférieur (4) de la paroi latérale et ledit rebord supérieur (7) s'élève selon un développement divergent à partir de la paroi de fond (2) du moule, lesdits plis (13) présentant une profondeur allant décroissant depuis ledit bord inférieur (4) vers ledit rebord supérieur (7).

3. Moule selon la revendication 2, caractérisé en ce que lesdits plis (13) ont une profondeur nulle audit rebord supérieur (7).

4. Moule selon la revendication 1, caractérisé en ce que ledit cordonnet inextensible (12) est soumis à une force de tension le long de toute l'extension circonférentielle dudit rebord supérieur (7).

5. Moule en papier pour la cuisson des gâteaux suivant la revendication 1, caractérisé en ce que ladite paroi latérale de confinement (3) a un bord inférieur (4) formé d'une première portion (5) repliée radialement vers l'intérieur du moule et une deuxième portion (6) pliée radialement vers l'extérieur du mouie, ladite deuxième portion (6) étant collée à la surface extérieure (2b) de la paroi de fond (2).

6. Procédé pour la fabrication d'un moule pour la cuisson des gâteaux, caractérisé en ce qu'il comporte les étapes consistant à:
- dérouler, à partir d'une bobine, un ruban de papier lisse présentant une première surface (14a) revêtue d'une matière anti-adhérente et une deuxième surface (14b) opposée à la première surface;
- replier un premier (15) et un deuxième (16) bords longitudinaux dudit ruban de papier (14), respectivement sur lesdites deuxième (14b) et première (14a) surfaces;
- soulever ledit premier bord replié (15) de ladite deuxième surface (14b);
- appliquer de la matière collante entre ledit premier bord (15) et ladite deuxième surface (14b);
- inserer un cordonnet inextensible (12) dans une boucle (12a) définie entre le premier bord longitudinal (15) et ladite deuxième surface (14b);
- rapprocher le premier bord longitudinal (15) de ladite deuxième surface (14b);
- plisser le ruban de papier (14) pour définir, sur ce ruban, une pluralité de plis disposés parallèlement côte à côte et s'étendant perpendiculairement à l'extension longitudinale dudit ruban;
- découper le ruban (14) en tronçons de longueur prédéterminée;
- enrouler et fixer le ruban (14) autour d'un bord périmétral d'un élément plat (19) en vue de définir un moule présentant une paroi de fond formée dudit élément plat et ayant une surface intérieure traitée avec de la matière antiadhérente et une surface extérieure opposée à ladite surface intérieure, aussi bien qu'une paroi latérale de confinement formée dudit ruban et présentant une surface intérieure revêtue de matière anti-adhérente, réalisée par ladite première surface du ruban lui-même;
- matricer le moule pour donner à un rebord supérieur (7) de ce dernier défini par ledit premier bord longitudinal du ruban de papier, une configuration repliée vers l'extérieur par rapport au moule, causant en conséquence, par une action d'étirage périmétral, l'aplatissage ou planage desdits plis (13) et la mise en tension du cordonnet (12) le long de toute l'extension périmétrale dudit rebord supérieur.

7. Procédè selon la revendication 6, caractérisé en ce que l'étape d'enrouler et fixer du ruban autour de l'élément plat comporte les étapes supplémentaires suivantes:
- mise en place de l'élément plat (19) contre une paroi de base (20b) d'un mandrin (20) dont la forme épouse celle du moule;
- enroulement du ruban de papier (14) autour d'une paroi périmétrale (20a) du mandrin (20);
- distribution de la matière collante entre le deuxième bord replié du ruban de papier et le bord périmétral de l'élément de base, en correspondance de ladite surface extérieure;
- repliement du deuxième bord du ruban de papier en vue de le fixer contre la paroi extérieure de l'élément de base.

8. Procédé selon la revendication 7, caractérisé en ce que pendant l'étape d'enroulement du ruban de papier autour de la paroi latérale du mandrin on effectue une autre étape de pré-orientation pendant laquelle ledit premier bord longitudinal est orienté vers l'extérieur dudit moule.
